# EUROPEAN PATENT APPLICATION

(11) **EP 4 123 794 A1**
(43) Date of publication of application: **25.01.2023**
(21) Application number: 22185845.9
(22) Date of filing: 19.07.2022
(51) Int. Cl.: H01M 50/107, H01M 50/152, H01M 50/179, H01M 50/186, H01M 50/533, H01M 50/548, H01M 50/552, H01M 50/567

(54) **SECONDARY BATTERY**

(30) Priority: 19.07.2021 KR 20210094322
(71) Applicant: Samsung SDI Co., Ltd., Yongin-si, Gyeonggi-do 17084 (KR)
(72) Inventor: CHO, Seong Bong, 17084 Yongin-si (KR); JEONG, Eui Kwang, 17084 Yongin-si (KR); YI, Jeong Wook, 17084 Yongin-si (KR); JUNG, Hyun Ki, 17084 Yongin-si (KR)
(74) Representative: Marks & Clerk LLP

(57) **Abstract**

Provided is a secondary battery. The secondary battery includes a can, an electrode assembly (110, 110') in the can, a collector plate (180, 180') electrically connected to the electrode assembly, and a terminal (160, 160') having a coupling part mechanically coupled to the collector plate by a pressure, electrically connected to the collector plate, and electrically connected to the electrode assembly.

## Description

### BACKGROUND

### 1. Field

Embodiments relate to a secondary battery having an improved terminal connection structure.

### 2. Description of the Related Art

In general, a cylindrical secondary battery includes a cylindrical electrode assembly, a cylindrical can accommodating the electrode assembly and an electrolyte, and a cap assembly coupled to an upper opening of the can to seal the can, and to allow current generated in the electrode assembly to flow to an external device. In addition, the cylindrical secondary battery is provided with a negative electrode terminal and a positive electrode terminal. The negative electrode terminal is electrically connected to a negative electrode collector plate, and the positive electrode terminal is electrically connected to a positive electrode collector plate. Here, the positive electrode terminal and the positive electrode collector plate are electrically connected to each other (e.g., by welding).

However, because foreign substances are generated as byproducts of welding during the welding, when metal foreign substances remain in the secondary battery, there is a limitation that stability of the battery may be deteriorated. In the case of ultrasonic resistance welding for solving this limitation, although the generation of the foreign substances may be reduced or prevented, there is a limitation that a base material is attached to a welding rod according to a shape or thickness of each of the collector plate and the terminal.

The above-described information disclosed in the technology that serves as the background of the present disclosure is only for improving understanding of the background of the present disclosure, and thus may include information that does not constitute the related art.

### SUMMARY

An aspect of the present disclosure provides a secondary battery having an improved terminal coupling structure.

According to one or more embodiments, a secondary battery includes a can, an electrode assembly in the can, a collector plate electrically connected to the electrode assembly, and a terminal having a coupling part mechanically coupled to the collector plate by a pressure, electrically connected to the collector plate, and electrically connected to the electrode assembly.

The coupling part may be bent outwardly from a center area of the terminal, wherein a portion of the collector plate is between the terminal and the coupling part to be coupled thereto.

The coupling part may have a diameter of about 3 pi (π) to about 8 pi (π).

The terminal may include a positive electrode terminal.

According to one or more other embodiments, a secondary battery includes a substantially cylindrical can having an open first side, an electrode assembly accommodated in the can, and including a first electrode plate and a second electrode plate, a first collector plate between the can and a first side of the electrode assembly, and electrically connected to the first electrode plate, a second collector plate between the can and a second side of the electrode assembly, and electrically connected to the second electrode plate, a cap plate coupled to the first side of the can, and electrically connected to the first collector plate, and a terminal inserted into a second side of the can, and including a coupling part mechanically coupled to the second collector plate by a pressure, and electrically connected to the second collector plate.

The coupling part may be bent outwardly from a center area of the terminal, wherein the second collector plate includes an inner diameter portion that defines a through-hole near a center the second collector plate and that is located between the terminal and the coupling part.

The coupling part may have a diameter of about 3 pi (π) to about 8 pi (π).

The second electrode plate may include a positive electrode plate, wherein the terminal includes a positive electrode terminal.

According to one or more embodiments, a method of manufacturing a secondary battery comprises inserting a terminal, a collector plate and an electrode assembly into an opened bottom of a can, the terminal having a coupling part; inserting a pressure tool through the electrode assembly; and pressing, by the pressure tool, the coupling part of the terminal to mechanically couple the coupling part to the collector plate, such that the terminal is electrically connected to the collector plate.

The method may comprise inserting a gasket into the can.

The method may comprise spacing the terminal and the collector plate apart within the can prior to the pressing.

The method may comprise bending the coupling part outwardly from a centre of the terminal during the pressing.

The method may comprise sealing a space between the terminal and the can using the gasket.

The method may comprise coupling and electrically connecting the collector plate and the terminal by only mechanical pressing and without welding.

The pressing may be a cold forming method.

At least some of the above and other features of the invention are set out in the claims.

### BRIEF DESCRIPTION OF DRAWINGS

The accompanying drawings are included to provide a further understanding of the present disclosure, and are incorporated in, and constitute a part of, this specification. The drawings illustrate embodiments of the present disclosure and, together with the description, serve to explain aspects of the present disclosure. In the drawings:
FIG. 1 is a schematic cross-sectional view of a cylindrical secondary battery according to one or more embodiments;
FIG. 2 is a schematic cross-sectional view of a cylindrical secondary battery according to one or more embodiments;
FIG. 3 is a cross-sectional view illustrating an initial process in coupling processes of a positive electrode terminal of FIGS. 1 and 2;
FIG. 4 is a cross-sectional view illustrating a later process in the coupling processes of the positive electrode terminal of FIGS. 1 and 2.

### DETAILED DESCRIPTION

Aspects of some embodiments of the present disclosure and methods of accomplishing the same may be understood more readily by reference to the detailed description of embodiments and the accompanying drawings. Hereinafter, embodiments will be described in more detail with reference to the accompanying drawings. The described embodiments, however, may have various modifications and may be embodied in various different forms, and should not be construed as being limited to only the illustrated embodiments herein. Rather, these embodiments are provided as examples so that this disclosure will be thorough and complete, and will fully convey the aspects of the present disclosure to those skilled in the art, and it should be understood that the present disclosure covers all the modifications, equivalents, and replacements within the idea and technical scope of the present disclosure. Accordingly, processes, elements, and techniques that are not necessary to those having ordinary skill in the art for a complete understanding of the aspects of the present disclosure may not be described.

Unless otherwise noted, like reference numerals, characters, or combinations thereof denote like elements throughout the attached drawings and the written description, and thus, descriptions thereof will not be repeated. Further, parts that are not related to, or that are irrelevant to, the description of the embodiments might not be shown to make the description clear.

In the drawings, the relative sizes of elements, layers, and regions may be exaggerated for clarity. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result, for example, of manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the particular illustrated shapes of regions, but are to include deviations in shapes that result from, for instance, manufacturing.

For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place.

Thus, the regions illustrated in the drawings are schematic in nature and their shapes are not intended to illustrate the actual shape of a region of a device and are not intended to be limiting. Additionally, as those skilled in the art would realize, the described embodiments may be modified in various different ways, all without departing from the scope of the present disclosure.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

It will be understood that when an element, layer, region, or component is referred to as being "formed on," "on," "connected to," or "coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure. The description of an element as a "first" element may not require or imply the presence of a second element or other elements. The terms "first", "second", etc. may also be used herein to differentiate different categories or sets of elements. For conciseness, the terms "first", "second", etc. may represent "first-category (or first-set)", "second-category (or second-set)", etc., respectively.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a secondary battery according to one or more embodiments of the present disclosure will be described in detail with reference to the accompanying drawings.

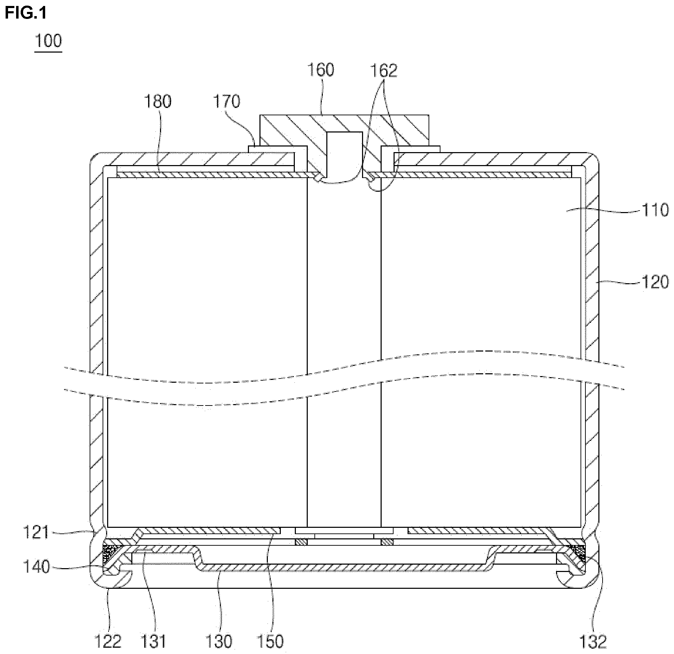

FIG. 1 is a schematic cross-sectional view of a cylindrical secondary battery according to one or more embodiments.

As illustrated in FIG. 1, a secondary battery 100 according to one or more embodiments includes an electrode assembly 110, a can 120, a cap plate 130, a first gasket 140, a first collector plate 150, a terminal 160, a second gasket 170, and a second collector plate 180.

The electrode assembly 110 may include a first electrode plate, a second electrode plate, and a separator.

The first electrode plate may be any one of a negative electrode plate and a positive electrode plate. For example, the first electrode plate may be a negative electrode plate. The first electrode plate that is the negative electrode plate may include a negative electrode coating portion on which a negative electrode active material is applied on a conductive metal thin plate (e.g., on a negative electrode collector plate made of copper, nickel foil, or mesh), and may include a negative electrode non-coating portion on which the negative electrode active material is not applied. For example, the negative electrode active material may include a carbon-based material, Si, Sn, tin oxide, a tin alloy composite, transition metal oxide, lithium metal nitrite, or metal oxide.

The second electrode plate may be the other one of the negative electrode plate and the positive electrode plate. For example, if the first electrode plate is the negative electrode plate, the second electrode plate may be the positive electrode plate. The second electrode plate may include a positive electrode coating portion on which a positive electrode active material is applied on a metal thin plate having superior conductivity (e.g., a positive electrode collector plate made of aluminum foil or mesh), and may include a positive electrode non-coating portion on which no positive electrode active material is applied. For example, the positive electrode active material may be formed of a chalcogenide compound, for example, composite metal oxide, such as LiCoO₂, LiMn₂O₄, LiNiO₂, LiNiMnO₂, and the like.

The separator is located between the first electrode plate and the second electrode plate to reduce or prevent the likelihood of a short circuit occurring between the first electrode plate and the second electrode plate. For example, the separator may be made of polyethylene, polypropylene, a porous copolymer of polyethylene and polypropylene, or the like.

For example, the electrode assembly 110 may be wound in a so-called jelly-roll shape by stacking the first electrode plate and the second electrode plate so that the non-coating portion of the first electrode plate protrudes downwardly from a lower end of the second electrode plate, and the non-coating portion of the second electrode plate protrudes upwardly from an upper end of the first electrode plate.

The can 120 may be provided in a cylindrical shape having one side (e.g. an end of the can) that is opened and another side that is closed to accommodate the electrode assembly 110. Although FIG. 1 illustrates that a bottom surface is opened, and that a top surface is closed, as may be suitable in one or more other embodiments, the top surface may be opened, and the bottom surface may be closed. However, hereinafter, and for convenience of understanding, it will be described that the bottom surface is opened, and the top surface is closed as illustrated in FIG. 1. In this case, the can 120 may be provided with a beading part 121 and a crimping part 122 at a lower portion thereof. Referring to FIG. 1, the beading part 121 protrudes from adjacent the upper side of the first collector plate 150 toward an interior of the can 120 to support the first collector plate 150. The crimping part 122 is bent inwardly with respect to a remainder of the can 120, while the cap plate 130 is located at an interior of the can 120, to at least partially surround an edge of the cap plate 130, thereby reducing or preventing a likelihood of the cap plate 130 being separated from the can 120.

The cap plate 130 serves to seal a bottom surface of the can 120. In addition, a notch 131 is provided in, or defined by, the cap plate 130 to serve as a safety vent for discharging a gas. A first gasket 140 for improving sealing strength and insulation may be inserted between the cap plate 130 and the crimping part 122. The cap plate 130 may be electrically connected to an inner circumferential surface of the can 120 and to the first collector plate 150 by conductive paste 132 or the like. In the above description, because the first electrode plate is the negative electrode plate, and because the first collector plate 150 is electrically connected to the negative electrode non-coating portion, each of the can 120 and the cap plate 130 may have a negative polarity.

The first collector plate 150 is electrically connected to the first electrode plate, which is the negative electrode plate, and the second collector plate 180 is electrically connected to the second electrode plate, which is the positive electrode plate. Each of the first collector plate 150 and the second collector plate 180 may have a substantially circular plate shape, and a respective through-hole may be defined at a center of each.

The terminal 160 may be installed on the top surface of the can 120 with reference to FIG. 1. For example, the terminal 160 may have a rivet shape. That is, a through-hole may be defined in the top surface of the can 120 so that a portion of the terminal 160 may be located to pass through the through-hole. A head of the terminal 160 is supported to be in contact with the top surface of the can 120, and a lower coupling part 162 of the terminal 160 is coupled to a lower side of the second collector plate 180. The coupling between the terminal 160 and the second collector plate 180 will be described later.

Here, the second gasket 170 is installed between the can 120 and the terminal 160 to insulate the can 120 from the terminal 160, and the second collector plate 180 electrically connects the second electrode plate of the electrode assembly 110 to the terminal 160. Accordingly, the terminal 160 has a positive polarity.

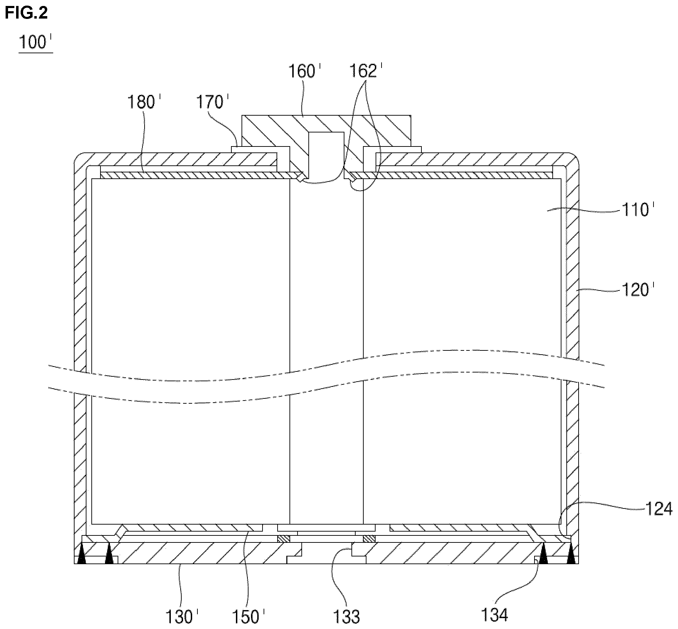

FIG. 2 is a schematic cross-sectional view of a cylindrical secondary battery according to one or more embodiments.

As illustrated in FIG. 2, a secondary battery 100' according to one or more embodiments includes an electrode assembly 110', a can 120', a cap plate 130', a first collector plate 150', a terminal 160', a second gasket 170', and a second collector plate 180'.

Because a structure of the electrode assembly 110' is the same as that of the electrode assembly 110 of FIG. 1 described above, detailed descriptions thereof will be omitted.

Referring to FIG. 2, the can 120' may have a cylindrical shape having an opened bottom surface and a closed top surface. The electrode assembly 110' is accommodated inside the can 120'. A groove 124 in which the cap plate 130' is seated may be formed in the lower inner circumferential surface of the can 120'.

The cap plate 130' is provided in a shape corresponding to the bottom surface of the can 120', for example, a circular plate shape to seal the bottom surface of the can 120'. A liquid injection port 133 may pass through the center of the cap plate 130'. A welding groove 134 may be formed at an edge of the cap plate 130'.

The first collector plate 150' is located between the electrode assembly 110' and the cap plate 130' to electrically connect a first electrode plate of the electrode assembly 110' to the cap plate 130'. In the above description, because the first electrode plate is a negative electrode plate, and because the first collector plate 150' is electrically connected to a negative electrode non-coating portion, each of the can 120' and the cap plate 130' has a negative polarity.

The can 120', the cap plate 130', and the first collector plate 150' may be bonded to each other by welding, for example, laser welding (respective welding portions are indicated by a triangle in FIG. 2).

Because the terminal 160' is the same as the terminal 160 of FIG. 1, repeated detailed descriptions thereof will be omitted.

In the secondary batteries according to the embodiments having the above-described structures (for example, the structures described with respect to FIG. 1 and FIG. 2), a process of coupling the positive electrode terminal to the second collector plate will be described in detail.

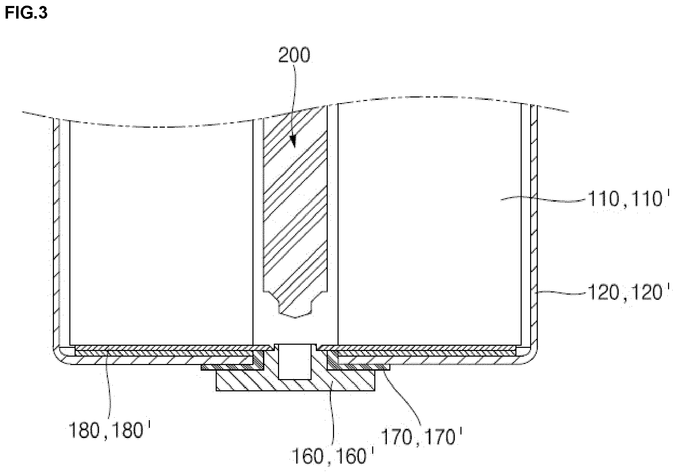

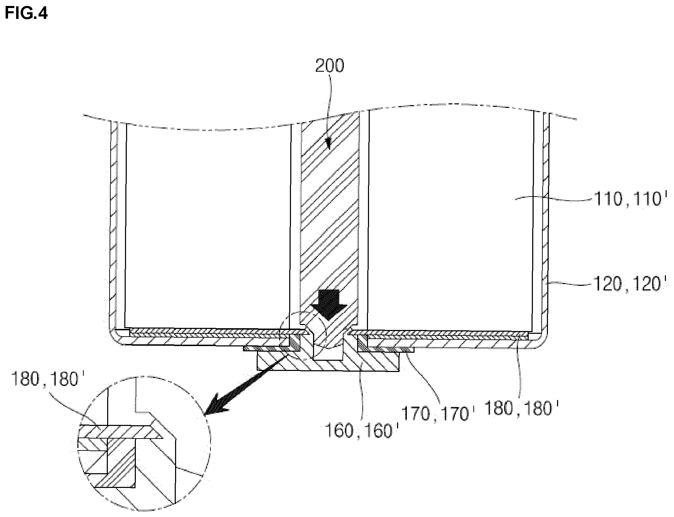

FIG. 3 is a cross-sectional view illustrating an initial process in coupling processes of the positive electrode terminal of FIGS. 1 and 2. FIG. 4 is a cross-sectional view illustrating a later process in the coupling processes of the positive electrode terminal of FIGS. 1 and 2. FIGS. 3 and 4 illustrate a structure in which the lower portion of the can is opened with reference to FIG. 1 or 2, and illustrate a state in which the can of FIG. 2 is overturned (upside down).

Each of the terminals 160 and 160' may be provided in the form of a rivet. The terminals 160 and 160' may be mechanically coupled to the second collector plates 180 and 180' that is electrically connected to the second electrode plate, which is the positive electrode plate, without welding, respectively.

For example, the mechanical coupling method between the terminals 160 and 160' and the second collector plates 180 and 180' may be a bonding method wherein pressure is applied. As an example of the bonding method for applying pressure, a clinching bonding method may be applied.

The clinching bonding method is a method in which a corresponding shape is provided at an end of a pressure tool 200 capable of applying a pressure, and a portion of an object subjected to the pressure is deformed (e.g., bent) and bonded while being pressed by the pressure tool 200. The clinching bonding may generate strain hardening of the material on a neck of the object subjected to pressure and high bonding strength by removing the notch. In addition, the clinching bonding method is a method that enables mechanical bonding of metals made of different materials or of metals of different thicknesses. In all processes of the clinching bonding method, because heat is not used, the clinching bonding method may be referred to as a cold forming method.

As illustrated in FIG. 3, first, the opened bottom surface of each of the cans 120 and 120' may be located to be faced upward. Then, the second gaskets 170 and 170' and the terminals 160 and 160' are inserted, and the second collector plates 180 and 180' and the electrode assemblies 110 and 110' may be inserted. Alternatively, after inserting the second collector plates 180 and 180' and the electrode assemblies 110 and 110' into the cans 120 and 120', the second gaskets 170 and 170' and the terminals 160 and 160' may be inserted. An end of each of the terminals 160 and 160' inserted into the cans 120 and 120' may have a thickness (e.g., a predetermined thickness) and may have a hollow cylindrical shape. In addition, the terminals 160 and 160' may be spaced apart from the second collector plates 180 and 180'. In more detail, an outer circumferential surfaces of each of the terminals 160 and 160' is spaced apart from the through-holes formed in the center of each of the second collector plates 180 and 180'. For example, an outer diameter of the end of each of the terminals 160 and 160' before the process of pressing may be about 3 pi (π) to about 8 pi (π). After locating the electrode assemblies 110 and 110', the terminals 160 and 160' may be pressed by inserting the pressure tool 200 through the hollows inside the electrode assemblies 110 and 110', respectively. The clinching bonding is applied to the process of pressing the terminals 160 and 160' through the pressure tool 200, and the pressure tool 200 may be a dedicated tool for the clinching bonding.

As illustrated in FIG. 4, when the end of each of the terminals 160 and 160' is pressed with a pressure (e.g., preset pressure) by the pressure tool 200, the ends of the terminals 160 and 160' are bent outwardly (e.g., from a center area of the terminals 160 and 160') while being deformed by the pressure. Although the second collector plates 180 and 180' and the ends of the terminals 160 and 160' are spaced apart before the pressing, each of the ends of the terminals 160 and 160' is plastically deformed while being in close contact with the collector plate by the pressure tool 200, and thus, the ends of the terminals 160 and 160' are coupled to the second collector plates 180 and 180', respectively. Ends of the terminals 160 and 160' that are deformed by the pressure and bonded to the second collector plates 180 and 180' are defined as coupling parts 162 and 162'. Here, inner diameter portions of the second collector plates 180 and 180' are in a state of being inserted between the terminals 160 and 160' and the coupling parts 162 and 162'. Thus, the coupling parts 162 and 162' of the terminals 160 and 160' and the second collector plates 180 and 180' may be electrically connected to each other.

As described above, the terminals 160 and 160' and the second collector plates 180 and 180' may be coupled and electrically connected in only the mechanical pressing method without the welding. Because spaces between the terminals 160 and 160' and the cans 120 and 120' are sealed by the second gaskets 170 and 170', respectively, and because the terminals 160 and 160' are fixed inside the cans 120 and 120', sealing force of the cans 120 and 120' may also be secured. In addition, because the terminals 160 and 160' are fixed without the welding, the likelihood of the generation of the foreign substances or the contamination of the welding equipment due to the welding may be reduced or prevented.

According to one or more embodiments described above, because the positive electrode terminal is coupled in the mechanical bonding manner rather than the welding, the metallic foreign substances otherwise existing in the battery may be reduced or prevented, and the stability of the battery may be improved.

In addition, according to one or more embodiments described above, the electrical resistance and the resistance distribution at the terminal coupling portion may be reduced or minimized.

In addition, according to one or more embodiments described above, because the terminal bonding process is simplified, and because contamination of the equipment may be reduced or prevented, the productivity and process reliability may be improved.

The above are merely embodiments, and thus, the present disclosure is not limited to the foregoing embodiments. Also, it will be understood by those of ordinary skill in the art that various changes in form and details may be made therein without departing from the scope of the present disclosure as defined by the following claims, with functional equivalents thereof to be included therein.

## Claims

1. A secondary battery comprising:
a can;
an electrode assembly in the can;
a collector plate electrically connected to the electrode assembly; and
a terminal having a coupling part mechanically coupled to the collector plate by a pressure, electrically connected to the collector plate, and electrically connected to the electrode assembly.

2. The secondary battery of claim 1, wherein the coupling part is bent outwardly from a center area of the terminal, and
wherein a portion of the collector plate is between the terminal and the coupling part to be coupled thereto.

3. The secondary battery of claim 1 or 2, wherein the coupling part has a diameter of about 3 pi to about 8 pi.

4. The secondary battery of any preceding claim, wherein the terminal comprises a positive electrode terminal.

5. A secondary battery comprising:
a substantially cylindrical can having an open first side;
an electrode assembly accommodated in the can, and comprising a first electrode plate and a second electrode plate;
a first collector plate between the can and a first side of the electrode assembly, and electrically connected to the first electrode plate;
a second collector plate between the can and a second side of the electrode assembly, and electrically connected to the second electrode plate;
a cap plate coupled to the first side of the can, and electrically connected to the first collector plate; and
a terminal inserted into a second side of the can, and comprising a coupling part mechanically coupled to the second collector plate by a pressure, and electrically connected to the second collector plate.

6. The secondary battery of claim 5, wherein the coupling part is bent outwardly from a center area of the terminal, and
wherein the second collector plate comprises an inner diameter portion that defines a through-hole near a center the second collector plate and that is located between the terminal and the coupling part.

7. The secondary battery of claim 5 or 6, wherein the coupling part has a diameter of about 3 pi to about 8 pi.

8. The secondary battery of claim 5, 6 or 7, wherein the second electrode plate comprises a positive electrode plate, and
wherein the terminal comprises a positive electrode terminal.

9. A method of manufacturing a secondary battery, the method comprising:
inserting a terminal, a collector plate and an electrode assembly into an opened bottom of a can, the terminal having a coupling part;
inserting a pressure tool through the electrode assembly;
pressing, by the pressure tool, the coupling part of the terminal to mechanically couple the coupling part to the collector plate, such that the terminal is electrically connected to the collector plate.

10. The method of claim 9, further comprising inserting a gasket into the can.

11. The method of claim 9 or 10, further comprising spacing the terminal and the collector plate apart within the can prior to the pressing.

12. The method of claim 9, 10 or 11, further comprising bending the coupling part outwardly from a centre of the terminal during the pressing.

13. The method of any one of claims 10-12, further comprising sealing a space between the terminal and the can using the gasket.

14. The method of any one of claims 9-13, wherein the collector plate and the terminal are coupled and electrically connected by only mechanical pressing and without welding.

15. The method of any one of claims 9-14, wherein the pressing is a cold forming method.
